(19) Europäisches Patentamt

European Patent Office

Office européen des brevets

(11) **EP 1 382 584 A1**

(12) **EUROPEAN PATENT APPLICATION**

(43) Date of publication:
**21.01.2004 Bulletin 2004/04**

(51) Int Cl.⁷: **C04B 18/10**, C04B 20/02, B03B 9/04, B09B 3/00

(21) Application number: **02016040.4**

(22) Date of filing: **18.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **ENCO S.r.l.**<br>**31027 Spresiano (TV) (IT)**<br><br>(72) Inventors:<br>• **Cassago, Davide c/o Politecno di Milano**<br>**20131 Milano (MI) (IT)** | • **Carsana, Maddalena c/o Politecno di Milano**<br>**20131 Milano (MI) (IT)**<br>• **Bertolini, Luca**<br>**31027 Spresiano (TV) (IT)**<br>• **Colleopardi, Mario**<br>**31027 Spresiano (TV) (IT)**<br><br>(74) Representative: **Banfi, Paolo**<br>**Bianchetti Bracco Minoja S.r.l.**<br>**Via Rossini, 8**<br>**20122 Milano (IT)** |

(54) **Aqueous slurries of ground bottom ash from incineration of municipal solid wastes for cement mixes**

(57) A process for the production of a slurry of bottom ashes from incineration of Municipal Solid Wastes (MSW) and the use thereof in the manufacture of cement mixes with improved properties.

EP 1 382 584 A1

## Description

The present invention regards the use of aqueous slurries of ground bottom ash from incineration of municipal solid wastes in the manufacture of cement mixes.

## INTRODUCTION

The amount of municipal solid wastes (MSW) available in Europe is a very big amount. It is estimated to be about 150 millions ton per year. In order to reduce the amount of waste disposed in landfill, MSW is incinerated. The reduction in mass achieved by the incineration process is about 70% of the original amount. Therefore, the potential amount of ash obtainable by incineration in Europe referred to the total mass of MSW is 150(1-0.70)=45 million ton/year. However, today only 20% of the available MSW is treated by incineration, and then about 9 million ton/year of ash are available. Most of this amount is still dumped in landfill.

The greatest amount (90%) of the incineration ash of MSW is in form of slag-like material containing 5-15 mm grains and is called "bottom ash" since it is dumped from the grate after combustion. On the other hand, the lower amount of ash (10%) is available in form of fine particles, is transported by the exausted combustion gas and is called "fly ash". The two terms "bottom ash" and "fly ash" waste, are analogous to the corresponding materials obtained by burning coal and already widely used in the cement industry.

## PRIOR ART

The use of MSW bottom ash as aggregate in asfalt concrete for road constructions is well known in the technical literature (R.W. Styron and F.H. Gustin *"MSW ash aggregate for use in asphalt concrete", ASTM Special Technical Publication. Proceedings of Symposium on a Critical Look on the waste materials, Miami, USA, pp. 129-142, 1992).*

Some researchers are studing the potential application of MSW bottom ash as aggregate for cement concrete (J. Pera, L. Contaz, J. Ambroise and M. Chababbet, *"Use of incinerator bottom ash in concrete", Cement and Concrete Research, Vol. 27, pp. 1-5, 1997).*

Other researchers are studing the behaviour of MSW bottom ash in the field of road construction after treatment with small amount of cement (3%) in order to improve the behaviour of MSW bottom ash as aggregate (G. Pecquer, C. Crignon and B Quénée, *"Behaviour of cement treated MSWI bottom ash", Waste Management, 21, pp. 229-233, 2001,* financially supported through the European Contract "Mashroad" BRST CT97-5150.

Another interesting use of both fly and bottom ash from MSW has been studied in Japan by Taiheyo Cement Corporation *(H. Uchikawa, H. Obana, "Ecocement: Frontier for recycling of urban composite waste", World Cement, pp. 33-36, 1995).* According to this process, the ash from incinerated MSW is used as ingredient for producing clinker by feeding the kiln with the other usual raw materials as limestone, clay, etc. Moreover, the clinker manufacturing process is significantly modified in order to recover alkali and heavy metals which, in form of chloride salts, volatilize with the exhausted combustion gas from the kiln.

## DESCRIPTION OF THE INVENTION

It has been surprisingly found that the ground bottom ash from Municipal Solid Wastes (MSW) acts as a true cementitious material able to increase strength and durability of concrete, provided that the bottom ash is ground in the presence of water.

Bottom ash from MSW, treated by a wet grinding process according to the invention, can be advantageously used as an additional ingredient in the production of cement mixes, grouts, mortars and concretes with improved properties of strength, elastic modulus, resistance to aggressive agents and water penetration, in combination with other conventional components such as cement, sand, coarse aggregate and chemical admixtures.

Wet-ground bottom ashes are in the form of a slurry which is produced by grinding coarse grains of the slag-type bottom ash in the presence of water. According to a preferred embodiment of the invention, the aqueous slurry has a water content of 15-80%, preferably from 45 to 55%. In another preferred embodiment, the grinding is carried out in two step, consisting in a preliminary dry grinding in the absence of water followed by final grinding after the addition of water to produce the aqueous slurry.

In order to reduce the volume of the slurry as well as the cost for its storage and transportation, the water content can be further lowered by the addition of chemical admixtures such as superplasticizers based on polycarboxilate.

The addition into the concrete of bottom ash, finely ground in the mill in the absence of water, does not provide concrete mixtures with the same performances obtained using an aqueous slurry of bottom ash, both bottom ashes being compared at the same fineness and chemical composition.

From the same source of material coming from a given incinerator, two bottom ashes were produced by dry or wet grinding at the same fineness, the only difference being the presence or the absence of water into the mill during the grinding process; the dry and the wet bottom ashes were used as additions for cement concrete mixtures at the same percentage, and the latter performed much better than the former. The experimental results are reported in the following Examples.

**EXAMPLES**

Two samples of bottom ash from the same incineration plant (Table 1) were ground at approximately the same particle size distribution of 1-10 μm (Figure), except for the presence or the absence of water during the mill; these materials will be indicated as wet-ground bottom ash (WG-BA) and dry-ground bottom ash (DG-BA) respectively.

The wet-ground bottom ash was manufactured in form of an aqueous slurry containing 50% of water. Similar results (not showed here) were obtained with other slurries where the water content was from 10 to 80%, except that the lower the amount of water, the more difficult is the manufacture of the slurry for its higher stiffness.

The other ingredients used to manufactured concrete mixes were:

- ➢ Portland cement CEM I 52.5R
- ➢ Sand (0-5 mm)
- ➢ Gravel (5-25 mm)
- ➢ Superplasticizer to improve workability
- ➢ Ground limestone (1-10 μm) used as filler
- ➢ Coal Fly ash (1-20 μm) from coal thermal plant.

Some examples are shown in order to demonstrate the definite superiority of the wet-ground bottom ash from incinerated MSW with respect to the dry-ground one, as well as with respect to other fine materials (ground limestone or coal fly ash) usually utilized in concrete mixtures.

**Example 1**

Three concrete mixtures were manufactured, the only difference being the presence of fine mineral additions in terms of:

- ➢ Ground limestone (GL) for the control mix
- ➢ Dried-ground bottom ash (DG-BA)
- ➢ Wet-ground bottom ash (WG-BA)

Table 2 shows the composition of the three concrete mixtures, whereas Table 3 shows the properties of concretes in terms of compressive strength and dynamic modulus of elasticity on cubic specimens (100 mm) and penetration to water under pressure (UNI EN 12390-8) on prismatic specimens (200x200x120 mm).

The performance results shown in Table 3 indicate that, with respect to control mixture (A) where ground-limestone was used, there is a significant reduction in performance for the mixture B with the dryed-ground bottom ash, and an important as un-expected performance increase for the mixture C where the wet-ground bottom ash was used. The performance improvement of wet-ground bottom ash with respect to dry-ground bottom ash was particularly surprising:

- ➢ 111% more in compressive strength at 1 day
- ➢ 134% more in compressive strength at 28 days
- ➢ 36% more in dynamic elastic modulus at 1day
- ➢ 25% more in dynamic elastic modulus at 28 days
- ➢ 62% less in water penetration under pressure

All these results indicate the better performance in terms of strength, elastic properties and durability (determined as lower penetration of aggressive agents through environmental water) of the mix (C) with wet-ground bottom ash according to the present invention with respect to the mix with ground limestone (A), and even more with respect to the mix (B) with the ground bottom ash without the special treatment (wet-grinding) according to the present invention.

The reason why there is a big difference between dry-ground bottom ash and the corresponding wet-ground bottom ash can be found in the difference in the specific weight: 2230 kg/m$^3$ for the concrete with dry-ground bottom ash mix versus 2450 kg/m$^3$ for the concrete with wet-ground bottom ash (Table 3). This could be ascribed to the gas development when dry-ground bottom ash was used directly into the concrete mixture due to the transformation of aluminium metallic particles of the bottom ash into hydrogen bubbles and Al(OH)$_3$:

$$2Al + 6H_2O \Rightarrow 3H_2 + 2Al(OH)_3 \qquad\qquad [1]$$

When wet-ground bottom ash was used, the reaction [1], developing gas and potentially responsible for the strength reduction of the concrete, occurred in the mill and not in the concrete mixture. In other words no hydrogen gas was produced into the concrete mixer when wet-ground bottom ash was used.

However, independently of this chemical effect, the better performance of the concrete with wet-ground bottom ash (C) with respect to the control mix (A) indicates the unexpected binder capability of the wet-ground bottom ash.

## Example 2

Two mixes with the wet-ground bottom ash from incineration of MSW and the well known coal fly ash were manufactured in order to assess the technical advantage of the bottom ash treated according to the present invention with respect to the fly ash from coal thermal plan widely used all over the world as excellent artificial pozzolan and in particular for blended cement according to the European Norm EN 197-1.

Table 4 shows the composition of two mortar cement mixes with ground-wet bottom ash and coal fly ash, whereas Table 5 indicates the strength performance at 1, 7 and 28 days. These results indicate that the bottom ash from incinerated MSW treated according to the present invention performs significantly better than fly ash from coal thermal plant in terms of higher compressive strength.

## Example 3

Table 6 shows the composition of two concrete mixtures with and without WG-BA. In this special example WG-BA, treated according to the present invention, was used to replace about 25% of Portland Cement with respect to the control mixture without wet-ground bottom ash (WG-BA). In order to reduce the amount of water in the aqueous slurry (which can be advantageous for reducing the volume of the slurry and then the cost for storage as well as for transportation) a superplasticizer based on polycarboxilate was used in the same amount as that used in the reference mix without bottom ash.

The compressive strength result (Table 7) indicate that, due to the use of the WG-BA, 29% of Portland Cement was reduced without any significant difference in the strength development (Table 6). This use of the WG-BA treated according to the present invention is particularly useful in concrete structures where the cement content must be reduced in order to decrease the thermal stress (related to the heat liberated by cement hydration) as well as the shrinkage strain (related to the water evaporation from hydrated cement paste). Moreover, at equal concrete performance, the partial replacement of Portland Cement (which needs huge amounts of energy to be produced) by the available bottom ash from MSW, treated according to the present invention, is one of the most friendly process for the environment, since there is a reduction in the energy needed to produce 1m$^3$ of concrete of given performance and a more useful and safe allocation of the bottom ash from incineration of MSW into the concrete with respect to the usual dump in the open air.

## Example 4

Table 8 shows the composition of two mortar mixes with (WG-BA)$_1$ and (WG-BA)$_2$, the only difference between these two wet-ground bottom ash being the way of wet-grounding. In one case, (WG-BA)$_1$ was obtained by grinding for 120 min in a mill bottom ash form incinerated MSW and water (50% by weight of the slurry); in the second case (WG-BA)$_2$ was obtained by a preliminary dry grinding of the bottom ash for 60 min, in the same mill as that adopted for producing (WG-BA)$_1$ and finishing the wet-grinding in the presence of water (50% of the slurry) in the same mill for additional 75 min so that the particle size distribution was approximately the same (within 1-15 $\mu$m).

Table 9 shows the mechanical properties of the two cement mixes and indicates that the two wet-ground bottom ashes perform approximately the same provided that they are compared at the same fineness.

**TABLES**

Table 1 -

| Chemical composition of Bottom Ash from MSW. | | | | | | | | |
|---|---|---|---|---|---|---|---|---|
| Oxide: | $SiO_2$ | CaO | $Al_2O_3$ | $Fe_2O_3$ | MgO | $P_2O$ | $K_2O$ | $Na_2O$ | $Cl^-$ |
| Percentage (%) | 59.1 | 15.7 | 8.2 | 9.1 | 1.7 | 0.6 | 0.7 | 1.8 | 0.01 |

Table 2 -

| Weight (kg) of ingredients of concrete mixture in a nominal 1 $m^3$ of concrete. | | | |
|---|---|---|---|
| Mix | A | B | C |
| Portland Cement | 320 | 320 | 320 |
| Water | 250 | 250 | 250* |
| Sand | 850 | 850 | 850 |
| Gravel | 850 | 850 | 850 |
| Ground Limestone | 120 | / | / |
| Dry-Ground Bottom Ash (kg) from incinerated MSW | / | 120 | / |
| Wet-Ground Bottom Ash (kg) from incinerated MSW | / | / | 120** |

*included that from the wet-ground bottom ash containing 50% of water

** referred only to the solid ingredient of the wet-ground bottom ash

Table 3 -

| Properties of concrete mixtures A, B, C manufactured according to the mix proportions of Table 2. | | | |
|---|---|---|---|
| Properties | Mix | | |
| | A | B | C |
| 1-day compressive strength | 20.5 MPa | 14.5 MPa | 30.6 MPa |
| 7-days compressive strength | 33.0 MPa | 18.3 MPa | 40.2 MPa |
| 28-days compressive strength | 44.0 MPa | 25.1 MPa | 58.7 MPa |
| 1-day elastic modulus | 28 GPa | 22 GPa | 30 GPa |
| 7-days elastic modulus | 33 GPa | 30 GPa | 38 GPa |
| 28-days elastic modulus | 40 GPa | 36 GPa | 45 GPa |
| Water penetration under pressure (mm) at 28 days | 30 | 32 | 12 |
| Specific weight at 28 days (kg/$m^3$) | 2440 | 2230 | 2450 |

Table 4 -

| Composition of mortar mixes with fly ash from coal thermal plant and wet-ground bottom ash (WG-BA) from incinerated MSW according to the present invention. | | |
|---|---|---|
| Mortar Mix | D | E |
| Portland Cement | 340 g | 340 g |
| Fly Ash | 75 g | / |

Table 4 -   (continued)

| Composition of mortar mixes with fly ash from coal thermal plant and wet-ground bottom ash (WG-BA) from incinerated MSW according to the present invention. | | |
|---|---|---|
| **Mortar Mix** | **D** | **E** |
| **WG-BA** | / | 75 g* |
| **Sand** | 1350 g | 1350 g |
| **Water** | 225 g | 225 g** |

\* as solid component of the aqueous slurry (50% water) containing wet-ground bottom ash

\*\* including water in the aqueous slurry of the wet-ground bottom ash.

Table 5 -

| Compressive strength of mortar mixes D and E shown in Table 4 | | | | | | |
|---|---|---|---|---|---|---|
| **Mix** | **D** | | | **E** | | |
| **Time (days)** | 1 | 7 | 28 | 1 | 7 | 28 |
| **Compressive Strength (MPa)** | 12.0 | 36.1 | 46.1 | 20.1 | 40.8 | 56.4 |

Table 6 -

| Composition of mortar mixes without (F) and with (G) wet-ground bottom ash (WG-BA) from incinerated MSW according to the present invention. | | |
|---|---|---|
| **Mortar Mix** | **F** | **G** |
| **Portland Cement (kg/m$^3$)** | 435 | 310 |
| **Sand (kg/m3)** | 1100 | 1100 |
| **Gravel (kg/m$^3$)** | 700 | 700 |
| **Superplasticizer (kg/m$^3$)** | 6 | /* |
| **WG-BA (kg/m$^3$)** | / | 125** |
| **Water** | 210 | 210*** |

\* The same amount of polycarboxilate-based superlasticizer was used to produce the wet-ground bottom ash as a fluid aqueous slurry with a reduced amount of water (30%)

\*\* As solid component of the aqueous slurry

\*\*\* Included that in the aqueous slurry

Table 7 -

| Compressive strength of concrete mix F (435 kg/m$^3$ of Portland Cement) vs. concrete mix G (310 kg/m$^3$ of Portland Cement) as shown in Table 6. | | | | | | |
|---|---|---|---|---|---|---|
| **Mix** | **F** | | | **G** | | |
| **Time (days)** | 1 | 7 | 28 | 1 | 7 | 28 |
| **Compressive Strength (MPa)** | 38.1 | 50.2 | 76.5 | 38.2 | 55.3 | 75.6 |

Table 8 -

| Composition of two mortar mixes with different wet-ground bottom awsh from incinerated MSW, both according to the present invention. | | |
|---|---|---|
| Mortar Mix | H | I |
| Portland Cement | 340 g | 340 g |
| (WG-BA)$_1$* | 75 g$^+$ | / |
| (WG-BA)$_2$** | / | 75 g$^{++}$ |
| Sand | 1350 g | 1350 g |
| Water | 225 g$^{+++}$ | 225 g$^{+++}$ |

* (WG-BA)$_1$ indicates a slurry of bottom ash ground in the presence of water (50%) for 120 min;

** (WG-BA)$_2$ indicates a slurry of bottom ash preliminarily ground in the absence of water for 60 min and then in the presence of water (50%) for additional 75 min so that the fineness is approximately the same as that of (WG-BA)$_1$: the particle size of both the ground materials was within 1-20 $\mu$m;

$^+$ as solid component of the aqueous slurry (50% water)

$^{++}$ as solid component of the aqueous slurry (50% water)

$^{+++}$ including the water in the aqueous slurry of (WG-BA)$_1$ and (WG-BA)$_2$

Table 9 -

| Compressive strength of mortar mixes H and I shown in Table 8. | | | | | | |
|---|---|---|---|---|---|---|
| Mix | H | | | I | | |
| Time (days) | 1 | 7 | 28 | 1 | 7 | 28 |
| Compressive Strength (MPa) | 19.1 | 37.2 | 49.4 | 18.4 | 37.6 | 50.2 |

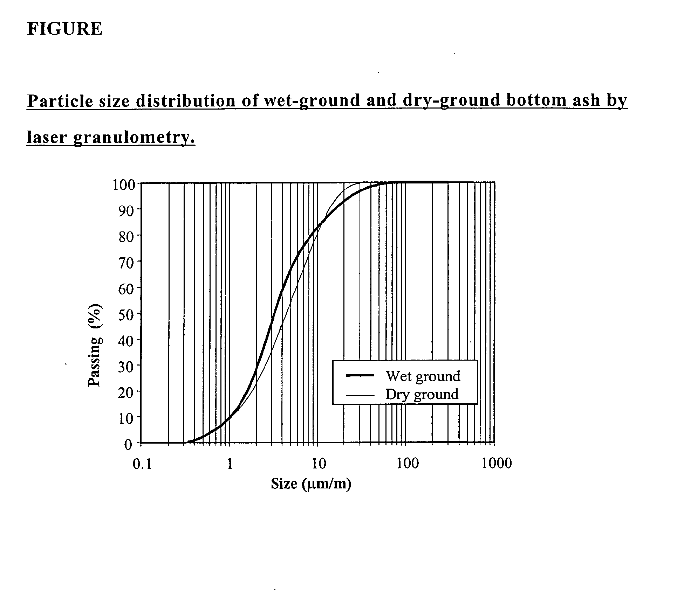

## Claims

1. A process for the production of a slurry of bottom ashes from incineration of Municipal Solid Wastes (MSW) which comprises grinding coarse grains of the slag-type bottom ash in the presence of water.

2. A process according to claim 1, which is carried out in the presence of 15-80% (w/w) water.

3. A process according to claim 2, where the water content is 45-55%.

4. A process according to claim 1 which is carried out in the presence of water and a superplascitizing admixture in order to reduce the amount of water in the slurry and to decrease the volume of the slurry.

5. A process according to claims 1-4, which comprises a preliminary dry grinding in the absence of water followed by a final grinding in the presence of water.

6. A slurry of bottom ashes from incineration of Municipal Solid Wastes (MSW) obtainable by the process of claims 1-5.

7. A cement mix containing a slurry according to claim 6.

8. A cement mix according to claim 7 containing, besides the cement base, additional ingredients selected from sand, gravel, limestone, coal fly ash, coal bottom ash and a superplasticizer.

9. A cement mix according to claim 8, wherein the cement base is Portland cement.

10. A cement mix according to claim 8, containing a superplasticizer based on polycarboxylate.

11. The use of a slurry according to claim 6 for the manufacture of cement mixes.

**FIGURE**

<u>Particle size distribution of wet-ground and dry-ground bottom ash by laser granulometry.</u>

**European Patent Office**

## EUROPEAN SEARCH REPORT

Application Number

EP 02 01 6040

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | WO 02 081398 A (QUADRIO CURZIO ALESSANDRO ;PETRACEM SRL (IT)) 17 October 2002 (2002-10-17) * page 6, line 5 - line 9; claims * --- | 1-3,6,11 | C04B18/10 C04B20/02 B03B9/04 B09B3/00 |
| A | LAMERS F J M ET AL: "UPGRADING TECHNIQUES FOR THE QUALITY IMPROVEMENT OF MUNICIPAL WASTEINCINERATION RESIDUES" ENVIRONMENTAL ASPECTS OF CONSTRUCTION WITH WASTE MATERIALS. MAASTRICHT, JUNE 1 - 3, 1994, PROCEEDINGS OF THE INTERNATIONAL CONFERENCE ON ENVIRONMENTAL IMPLICATIONS OF CONSTRUCTION WITH WASTE MATERIALS. (WASCON), AMSTERDAM, ELSEVIER, NL, vol. CONF. 2, 1 June 1994 (1994-06-01), pages 645-654, XP000480205 * table 1 * --- | 1 | |
| A | WO 02 11960 A (ENVIROC INC ;MEHLHOFF MICHAEL P (US)) 14 February 2002 (2002-02-14) * claims * --- | 1,2,6-9, 11 | |
| A | US 4 804 147 A (HOOPER WILLIAM F) 14 February 1989 (1989-02-14) * claims * --- | 1,6,11 | TECHNICAL FIELDS SEARCHED (Int.Cl.7) C04B B09B B03B |
| A | DATABASE EPODOC [Online] EUROPEAN PATENT OFFICE, THE HAGUE, NL; XP002226357 * abstract * & CN 1 105 344 A (LIANYUNGANG CITY INST OF BUILD) 19 July 1995 (1995-07-19) --- | 1 | |
| A | GB 2 272 695 A (NEEDHAM GROUP LIMITED) 25 May 1994 (1994-05-25) * examples * ----- | 1 | |

The present search report has been drawn up for all claims

| Place of search | Date of completion of the search | Examiner |
|---|---|---|
| THE HAGUE | 7 January 2003 | Theodoridou, E |

**EP 1 382 584 A1**

## ANNEX TO THE EUROPEAN SEARCH REPORT
## ON EUROPEAN PATENT APPLICATION NO.

EP 02 01 6040

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2003

| Patent document cited in search report | | | Publication date | Patent family member(s) | | Publication date |
|---|---|---|---|---|---|---|
| WO 02081398 | A | | 17-10-2002 | WO | 02081398 A2 | 17-10-2002 |
| WO 0211960 | A | | 14-02-2002 | AU<br>WO | 8306101 A<br>0211960 A1 | 18-02-2002<br>14-02-2002 |
| US 4804147 | A | | 14-02-1989 | NONE | | |
| CN 1105344 | A | | 19-07-1995 | NONE | | |
| GB 2272695 | A | | 25-05-1994 | NONE | | |

EPO FORM P0459